(19) Europäisches Patentamt
European Patent Office
Office européen des brevets

(11) **EP 2 537 216 B1**

(12) **EUROPÄISCHE PATENTSCHRIFT**

(45) Veröffentlichungstag und Bekanntmachung des Hinweises auf die Patenterteilung:
**11.05.2016 Patentblatt 2016/19**

(21) Anmeldenummer: **11703011.4**

(22) Anmeldetag: **15.02.2011**

(51) Int Cl.:
*H01S 3/106* (2006.01)     *H01S 3/107* (2006.01)

(86) Internationale Anmeldenummer:
**PCT/EP2011/052179**

(87) Internationale Veröffentlichungsnummer:
**WO 2011/101329 (25.08.2011 Gazette 2011/34)**

(54) **LASERVERSTÄRKUNGSSYSTEM UND -VERFAHREN ZUR ERZEUGUNG VON ABRUFBAREN LASERPULSEN**

LASER AMPLIFICATION SYSTEM AND METHOD FOR GENERATING RETRIEVABLE LASER PULSES

SYSTÈME ET PROCÉDÉ D'AMPLIFICATION DE LASER POUR GÉNÉRER DES IMPULSIONS LASERS REPRODUCTIBLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.02.2010 EP 10153819**

(43) Veröffentlichungstag der Anmeldung:
**26.12.2012 Patentblatt 2012/52**

(73) Patentinhaber: **High Q Laser GmbH**
**6830 Rankweil (AT)**

(72) Erfinder:
• **MEIER, Joachim**
**22589 Hamburg (DE)**
• **LEDERER, Maximilian, Josef**
**22587 Hamburg (DE)**

(74) Vertreter: **Kaminski Harmann**
**Patentanwälte AG**
**Landstrasse 124**
**9490 Vaduz (LI)**

(56) Entgegenhaltungen:
WO-A1-2005/053118     WO-A1-2008/006863
FR-A1- 2 852 155       US-A1- 2002 191 279
US-A1- 2005 074 038

• GRUETZMACHER JULIE A ET AL: "Few-cycle mid-infrared pulse generation, characterization, and coherent propagation in optically dense media", REVIEW OF SCIENTIFIC INSTRUMENTS, AIP, MELVILLE, NY, US, Bd. 73, Nr. 6, 1. Juni 2002 (2002-06-01), Seiten 2227-2236, XP012040042, ISSN: 0034-6748, DOI: 10.1063/1.1480464
• OKSENHENDLER T ET AL: "Intracavity acousto-optic programmable gain control for ultra-wide-band regenerative amplifiers", APPLIED PHYSICS B ; LASERS AND OPTICS, SPRINGER, BERLIN, DE LNKD- DOI:10.1007/S00340-006-2231-0, Bd. 83, Nr. 4, 5. Mai 2006 (2006-05-05), Seiten 491-494, XP019424545, ISSN: 1432-0649
• JAN K. JABCZYNSKI ET AL.: "Acousto-optically Q-switched and mode locked diode pumped Nd:YVO4 laser", SPIE, PO BOX 10 BELLINGHAM WA 98227-0010 USA, Bd. 6100, 61000P, 2006, Seiten 61000P-1-61000P-8, XP040218876,
• FUJIMOTO ET AL: "Programmable shaping of a subterawatt, femtosecond laser pulse by modulating the spectral phase of the preamplified pulse", OPTICS COMMUNICATIONS, NORTH-HOLLAND PUBLISHING CO. AMSTERDAM, NL, Bd. 280, Nr. 2, 25. Oktober 2007 (2007-10-25), Seiten 404-407, XP022315007, ISSN: 0030-4018, DOI: 10.1016/J.OPTCOM.2007.08.010

- **OKSENHENDLER T ET AL: "Ultrawideband regenerative amplifiers via intracavity Acousto-Optic Programmable Gain Control", LASERS AND ELECTRO-OPTICS AND 2006 QUANTUM ELECTRONICS AND LASER SCIENCE CONFERENCE. CLEO/QELS 2006. CONFERENCE ON, IEEE, PISCATAWAY, NJ, USA, 21. Mai 2006 (2006-05-21), Seiten 1-2, XP031394353, ISBN: 978-1-55752-813-1**

Bemerkungen:

Die Akte enthält technische Angaben, die nach dem Eingang der Anmeldung eingereicht wurden und die nicht in dieser Patentschrift enthalten sind.

## Beschreibung

Die Erfindung betrifft ein Laserverstärkungssystem nach dem Oberbegriff des Anspruchs 1 und ein Laserverstärkungsverfahren zur Erzeugung von abrufbaren Laserpulsen mit einer vorgegebenen Pulszeit und/oder Pulsenergie nach dem Oberbegriff des Anspruchs 10.

Für viele Anwendungen, wie z.B. in der Biomedizin oder der Materialbearbeitung, werden hohe Intensitäten von Laserpulsen gefordert. Bei guter Strahlqualität ($M^2 < 1,2$) und pico- oder femto-Sekunden Pulsen bedeutet dies in der Regel Pulsenergien im Bereich von 1-10 $\mu$J, um die typischen Ablations- bzw. Bearbeitungsschwellenenergiedichten zu übertreffen und eine effiziente Prozessführung zu ermöglichen.

Die für solche Anwendungen eingesetzten gepulsten Lasersysteme, insb. für industrielle Anwendungen, welche häufig als wiederherstellbare bzw. regenerative Verstärker oder Regenerative Amplifier ausgeführt sind, benötigen in zunehmendem Maße die Fähigkeit, Laserpulse auf Anforderung ("on demand") bereitstellen zu können. Dies ist für typische Laser der Nanosekunden-Klasse, d.h. mit charakteristischen Pulsdauern im Bereich von einigen bis einigen Zehn Nanosekunden durchaus ein bereits standardmässig integriertes Merkmal. Mit der Reifung von Anwendungen, welche spezifisch mit ultrakurzen Pulsen, d.h. mit Pulsdauern im Bereich von einigen bis einigen Zehn Piko- und Femtosekunden, vorteilhaft bzw. alleinstehend bedient werden können, wird die "Pulse-on-Demand"-Operation zukünftig auch für diese Laser ein unabdingbares Merkmal werden. Diese Fähigkeit bedeutet die Abrufbarkeit von Pulsen mit vorgegebenen Soll-Energien und/oder Soll-Pulsdauern nach Bedarf bzw. in Abhängigkeit von den aktuell benötigten Anforderungen. Typische Anforderungen, welche heute speziell in der industriellen Anwendung bestehen, sind beispielsweise

a. Die Einstellung von Repetitionsrate und Pulsenergie während der Bearbeitung. Diese sind in gegenwärtigen Systemen des Stands der Technik meistens nicht sehr zeitkritisch und können im Bezug auf die Systemzeitkonstanten des Lasers als adiabatisch angenommen werden.

b. Der Start eines Pulszuges bei bestimmter Repetitionsrate und Pulsenergie mit TTL-Signal wobei die Schaltflanke zwischen zwei Pulsen des verstärkten Pulszuges liegen muss.

c. Die Pulsenergieüberhöhung der ersten Pulse soll gering sein, z.B. < 10% vom Zielwert der Pulsenergie. Je nach Prozess können auch höhere Energieüberhöhungen akzeptiert werden, in manchen Prozessen sind jedoch nur minimale oder aber keinerlei Abweichungen zulässig.

d. Schliesslich werden zunehmend Anwendungen bekannt, in welchen Einstellungen von Pulsrepetitionsrate und Pulsenergie kontinuierlich, z.B. von Null bis zum Maximalwert der Repetitionsrate ($0 - f_{max}$) und zeitkritisch, d.h. mit schnellen Einstellzeiten, z.B. < 1 $\mu$s, vorgenommen werden können bzw. müssen.

Die letzten beiden Punkte c. und d. stellen die kritischen Anforderungen dar und sind in Ultrakurzpuls-Lasersystemen des Stands der Technik nicht erreichbar. Zwar gibt es technische Lösungen mit welchen sehr gute Zeitauflösung und somit "on-demand"-Operation bzw. Abrufbarkeit von Pulsen erreicht werden kann. Dies wird typischerweise mit hochrepetierenden Oszillatoren, einem nachgeschalteten Pulsselektor, gefolgt von einem oder mehreren linearen Nachverstärkern verwirklicht. Durch die sehr hohe Verstärkung kommt es jedoch zu Energieüberhöhung (Einschwingvorgängen) beim Einschalten oder Zustandsänderungen in der Repetitionsrate des Pulsselektors. Diese liegen weit über den als zulässig angesehenen Werten.

Als zu realisierende Mindestanforderungen von solchen Lasersystemen mit bedarfsgerecht abrufbaren Pulsen vorgegebenen Dauer, zeitlicher Separation (Wiederholrate) und Energie können die folgenden Schwellen angeben werden

1. Die Pulsenergieüberhöhung der ersten Pulse nach Beginn eines Puls-Burst soll nur gering sein, was typischerweise eine Abweichung von « 10% vom Zielwert der Pulsenergie bedeutet.

2. Die Pulsrepetitionsrate und Pulsenergie sollen kontinuierlich von Null bis zum jeweiligen Maximalwert und zudem zeitkritisch, d.h. mit Zeitskalen « 1 $\mu$s, variiert werden können.

Aus dem Stand der Technik sind verschiedene Ansätze bekannt, bei denen das Ausgangssignal bzw. der ausgekoppelte Laserpuls gemessen werden. Basierend auf diesem Signal kann dann eine Verlustmodulation des zu verstärkenden Laserpulses erfolgen. Allerdings setzen diese Ansätze damit die Erzeugung eines Pulses voraus und wirken somit nur für die nachfolgenden Pulse, so dass keine sofortige und instantane Beeinflussung des zu verstärkenden, abrufbaren Pulses erfolgt.

Somit besteht eine Aufgabe der vorliegenden Erfindung in der Bereitstellung eines verbesserten Lasersystems bzw. eines entsprechenden Verfahrens zur Erzeugung von abrufbaren Laserpulsen mit einer vorgegebenen Pulsdauer und/oder Pulsenergie.

Eine weitere Aufgabe ist es, ein solches Lasersystem bereitzustellen, welches so ausgelegt ist, dass das System so gesteuert oder geregelt wird, dass bereits bei den ersten abgerufenen Pulse nur eine geringe Pulsenergieüberhöhung auftritt sowie kontinuierlich und instantan variierbare Pulsrepetitionsraten und Pulsenergien ermöglicht werden.

Diese Aufgaben werden durch die Gegenstände der Ansprüche 1 bzw. 10 oder der abhängigen Ansprüche gelöst bzw. die Lösungen weitergebildet.

Die Erfindung basiert auf der Verwendung eines Verlust-Modulators in einem Laserverstärkungssystem zur Bereitstellung von abrufbaren Laserpulsen. Die Laserpulse werden von einer Laserquelle erzeugt und durch ein nachgeschaltetes Verstärkungsmedium verstärkt, wobei die Verstärkung durch den Verlust-Modulator beeinflussbar gestaltet ist, so dass die abrufbaren Laserpulse mit einer vorgegebenen Pulszeit oder Pulsenergie bereitgestellt werden können. Erfindungsgemäss wird vor einem Verstärkungsvorgang für einen der Laserpulse der für diesen Vorgang relevante aktuelle Zustand des Lasermediums bestimmt. Der hierbei zu betrachtende Parameter ist die jeweils gegebene momentane Verstärkung des Lasermediums, aus dessen Kenntnis die Verlusterzeugung durch den Verlust-Modulator geregelt oder gesteuert wird. Die Beeinflussung des jeweils nächsten zu verstärkenden Pulses durch die Verlustmodulation beruht somit auf der Kenntnis des aktuellen bzw. historischen Zustands des verstärkenden Systems.

Durch die Bestimmung der Verstärkung bzw. des Verstärkungsfaktors vor einem Pulsdurchgang durch das Lasermedium kann somit der nachfolgende Verstärkungsvorgang ex-ante und zeitnah angepasst werden, so dass zum einen gut an die Anforderungen angepasste Laserpulse bereitgestellt werden. Zum anderen erfolgt diese Anpassung verzugsfrei, da nicht erst nach einem Verstärkungsvorgang das Ausgangssignal zur Regelung gemessen werden muss.

Eine solche Anpassung der Verlust-Modulation kann durch die direkte Messung des Zustands des Lasermediums erfolgen, z.B. durch Messung der Fluoreszenz bzw. des Sättigungszustandes. Diese Grösse verkörpert den im nachfolgenden Durchgang des Laserpulses zu erwartenden Verstärkungseffekt, so dass die Eingangscharakteristik des Laserpulses in Abhängigkeit von den gewünschten Parametern, wie bspw. Pulsdauer und Pulsenergie, durch die Verlustmodulation an das erwartete Verstärkungsverhalten angepasst werden kann. Die gemessene Fluoreszenz repräsentiert die Sättigung des Lasermediums und damit auch die vorangegangenen Verstärkungsvorgänge und die zeitlichen Veränderungen im Medium.

Dementsprechend kann alternativ oder auch ergänzend zur direkten Messung eine modellbasierte Steuerung erfolgen, durch das der Zustand des Lasermediums und dessen Verhalten abgebildet und damit prognostiziert wird. In einer solchen Modellierung können dabei neben dem Lasermedium selbst auch weitere Einflüsse, wie z.B. Verluste durch Komponenten eines Laserresonators, berücksichtigt werden. Die Modellparameter können dabei durch Messung von Eingangs- und Ausgangssignal oder anderer verstärkungsrelevanter Grössen, wie z.B. der Fluoreszenz bzw. des Sättigungszustandes, aktualisiert und das Modell somit in gewissen Zeitabständen oder auch kontinuierlich und fortlaufend angepasst werden.

Die genaue Position des Verlust-Modulator und der Sensoren zur Messung der jeweils den Verstärkungsvorgang bzw. das Verstärkungsvermögen des Lasermediums beschreibenden Grössen sind dabei von der konkret gewählten Anordnung abhängig.

Ein typisches Beispiel für eine Pulsverstärkungseinrichtung stellt die Anordnung nach dem Prinzip des wiederherstellbaren Verstärkers dar. Eine solche Anordnung ist beispielsweise aus der EP 1 687 876 bekannt, bei dem innerhalb des Resonators eine Verlustmodulation mit der Zeitskala der Pulserzeugung erfolgt. Als weitere Komponente enthält dieser einen hinreichend schnellen Verlustmodulator. Dieser kann ein akusto-optischer Modulator, ein elektro-optischer Modulator oder eine andere gleichwirkende geeignete Komponente sein. Mithilfe dieses schnellen Modulators wird der Resonatorverlust des Verstärkers je nach Pulsanforderung, bspw. von Zeitpunkt und Energie, erfindungsgemäss so geregelt bzw. gesteuert, dass Laserpulse mit der angeforderten Pulsdauer und Pulsenergie abrufbar bereitgestellt werden. Als Feedbacksignal für eine Regelung kann z. B. ein der Verstärker-Fluoreszenz, und somit der Verstärkung, entsprechendes Signal verwendet werden. Die Steuerung kann beispielweise auf der analytischen oder empirischen Modellierung des Resonatorverhaltens oder aber auch unter Verwendung von Look-up-Tabellen mit das Resonatorverhalten beschreibenden Werten erfolgen.

Zusätzlich zum Regenerativen Verstärker mit schnellem Verlustmodulator kann ein solches Laserverstärkungssystem im Standard-Ausführungsbeispiel einen Saat-Oszillator, Steuer-/Regelelektronik und gegebenenfalls weitere optionale Komponenten wie eine weitere Pulsselektion, einen Pulskompressor und nichtlineare Konversionsstufen enthalten.

Erfindungsgemässe Laserverstärkungssysteme zur Erzeugung von abrufbaren Laserpulsen mit einer vorgegebenen Pulszeit und/oder Pulsenergie und das zugrundeliegende erfindungsgemässe Laserverstärkungsverfahren werden nachfolgend anhand von in der Zeichnung schematisch dargestellten Ausführungsbeispielen rein beispielhaft näher beschrieben. Im Einzelnen zeigen

Fig.1    die schematische Darstellung eines ersten Ausführungsbeispiels eines erfindungsgemässen Laserverstärkungssystems mit Überwachung der Fluoreszenz;

Fig.2    die schematische Darstellung von Hard- und Softwarekomponenten für das erste Ausführungsbeispiel;

Fig.3    die schematische Darstellung eines zweiten Ausführungsbeispiels eines erfindungsgemässen Laserverstärkungssystems mit modellbasierter Berechnung der Verstärkung;

Fig.4    die schematische Darstellung von Hard- und Softwarekomponenten für das zweite Ausführungsbeispiel;

Fig.5    die schematische Darstellung eines Laserverstärkersystems nach dem Prinzip des wiederherstellbaren Verstärkers nach dem Stand der Technik;

Fig.6    die schematische Darstellung eines dritten Ausführungsbeispiels des erfindungsgemässen Laserverstärkungssystems nach dem Prinzip des wiederherstellbaren Verstärkers mit Überwachung der Fluoreszenz und als Beispiel für ein von einer Laserbearbeitungsanlage mit Scanner gesteuertem Ultrakurzpulslasersystem;

Fig.7    die schematische Darstellung eines vierten Ausführungsbeispiels des erfindungsgemässen Laserverstärkungssystems nach dem Prinzip des wiederherstellbaren Verstärkers mit Überwachung der Fluoreszenz und mit weiteren Komponenten zur Erzeugung Höherharmonischer;

Fig.8    die Übersicht über Parameter für das vierte und ein fünftes Ausführungsbeispiel von erfindungsgemässen Laserverstärkungssystemen;

Fig.9    Verstärkungskonstante und Pulsenergie für das vierte Ausführungsbeispiel bei 100 kHz ohne erfindungsgemässe Regelung;

Fig.10   Verstärkungskonstante und Pulsenergie für das fünfte Ausführungsbeispiel bei 100 kHz ohne erfindungsgemässe Regelung;

Fig.11   Verstärkungskonstante und Pulsenergie für das vierte Ausführungsbeispiel bei Durchlaufen einer Frequenzrampe ohne erfindungsgemässe Regelung;

Fig.12   Verstärkungskonstante und Pulsenergie für das fünfte Ausführungsbeispiel bei Durchlaufen einer Frequenzrampe ohne erfindungsgemässe Regelung;

Fig.13   Verstärkungskonstante und Pulsenergie für das vierte Ausführungsbeispiel bei Durchlaufen einer Frequenzrampe mit erfindungsgemässer Regelung;

Fig.14   Verstärkungskonstante und Pulsenergie für das fünfte Ausführungsbeispiel bei Durchlaufen einer Frequenzrampe mit erfindungsgemässer Regelung;

Fig.15   Verstärkungskonstante und Pulsenergie für das vierte Ausführungsbeispiel mit zufälligem Timing ohne erfindungsgemässe Regelung;

Fig.16   Verstärkungskonstante und Pulsenergie für das fünfte Ausführungsbeispiel mit zufälligem Timing ohne erfindungsgemässe Regelung;

Fig.17   Verstärkungskonstante und Pulsenergie für das vierte Ausführungsbeispiel mit zufälligem Timing mit erfindungsgemässer Regelung;

Fig.18   Verstärkungskonstante und Pulsenergie für das fünfte Ausführungsbeispiel mit zufälligem Timing mit erfindungsgemässer Regelung und

Fig.19   die schematische Darstellung eines sechsten Ausführungsbeispiels des erfindungsgemässen Laserverstärkungssystems nach dem Prinzip des wiederherstellbaren Verstärkers mit modellbasierter Berechnung der Verstärkung.

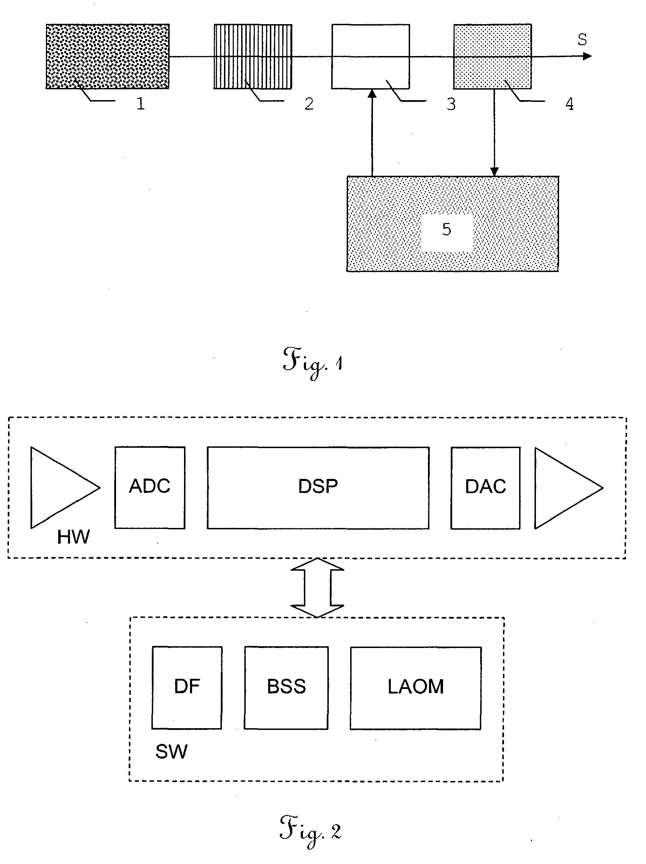

Fig. 1 zeigt die schematische Darstellung eines ersten Ausführungsbeispiels eines erfindungsgemässen Laserverstärkungssystems mit einer Überwachung der Fluoreszenz. In dieser Anordnung wird durch eine Laserquelle 1 ein Laserpuls erzeugt, der durch eine nachgeschalteten Pulsselektor 2 gezielt als zu verstärkender Laserpulse ausgewählt wird. Der Laserpuls wird durch ein Lasermedium 4 geführt, dort verstärkt und schliesslich als abrufbarer Laserpuls S ausgekoppelt und nachfolgend verwendet. Dem Lasermedium 4 ist ein Verlust-Modulator 3 vorgeschaltet, wobei der Verlust-Modulator 3 so angeordnet und geschaltet ist, dass dieser die Verstärkung der Laserpulse durch das Lasermedium 4 durch Verlusterzeugung moduliert, so dass die abrufbaren Laserpulse S mit einer vorgegebenen Pulszeit und/oder Pulsenergie bereitgestellt werden.

Vor einem Verstärkungsvorgang für einen der Laserpulse wird die jeweils momentane Verstärkung des Lasermediums 4 mittels einer Fluoreszenzmeßanordnung bestimmt und die Verlusterzeugung durch den Verlust-Modulator 3 in Abhängigkeit von der momentanen Verstärkung des Lasermediums 4 durch eine Steuer-/Regelelektronik 5 angepasst.

Als Laserquelle 1 kann z.B. eine typische Laseranordnung zur Erzeugung von Piko- oder Femtosekundenpulsen mit einer Ausgangsleistung von 0,1 bis 10W, Wiederholraten von 10 bis 100 MHz, Pulslängen von 100 fs bis 10 ps und einer Wellenlänge zwischen 700 nm und 1,7 $\mu$m zum Einsatz kommen. Laserquellen mit diesen technischen Daten sind bspw. als Nd:YVO Laser mit 8 bis 13 ps Pulsdauer oder als Yb:KYW Laser mit 100 bis 400 fs Pulsdauer erhältlich. Ähnliche Spezifikationen können aber auch mit Ti:Saphir oder Cr:LiSAF-Lasern (Wellenlänge ca. 800nm) oder durch den Einsatz von Yb oder Er dotierten Faserlasern (Wellenlängen 1040 nm bzw. 1550 nm) erreicht werden.

Als Pulsselektor 2 bzw. den Verlust-Modulator 3 können akusto- oder elektro-optische Modulatoren des Stands der Technik eingesetzt werden, wobei auch eine Kombination Beider Funktionalitäten in einem Modulator realisierbar ist.

Als Lasermedium 4 können sowohl "Bulk"-Kristalle als auch Faserverstärker eingesetzt werden. Ein Beispiel für "Bulk"-Kristalle ist der Einsatz eines ca. 30mm langen Nd:YVO Kristalls, der mit einer Laserdiode (100 W, 880 nm) optisch gepumpt wird. Eine solche Anordnung ist geeignet, um ps-Pulse zu verstärken, wobei Ausgangsleistungen von > 50 W bei Pulsenergien > 200 $\mu$J erreichbar sind.

Realisierungen mit einer Faser können eine > 40cm lange Faser mit Yb- oder Er-Dotierung einsetzen, wobei derartige Verstärker mit "klassischen" Fasern wie z.B. in der Telekommunikation üblich, oder mit Fasern basierend auf Photonischen Kristallen, z.B. basierend auf der Rod-Type-Fiber Technologie, ausgeführt werden können. Die erste Umsetzung eines Faserverstärkers ist eine Standardtechnologie in der Telekommunikation. Dort werden üblicherweise Pulse mit > 10 ps verstärkt und Durchschnittsleistungen von <1 W eingesetzt, wobei aber auch Faserverstärker mit einigen Watt Leistung bzw. fs-Pulsdauer realisierbar sind. Die zweite Umsetzung ist besonders zur Verstärkung von Pulsdauern <500 fs geeignet und es können mit Yb-dotierten Rod-type Fasern Ausgangsleistungen von mehreren 10 Watt realisiert werden. Als Pumpquelle kommen in beiden Fällen Laserdioden mit Leistungen von einigen Watt bis zu einigen hundert Watt in Frage.

In Fig.2 erfolgt die schematische Darstellung von Hard- und Softwarekomponenten der Steuer-/Regelelektronik 5 als Auswerteelektronik für die Fluoreszenz-Messung des ersten Ausführungsbeispiels. Durch die Steuer-/Regelelektronik 5 wird die notwendige Eingangsenergie berechnet, um durch die Verstärkung und darauf abgestimmte Verlustmodulation eine vorgegebene Ausgangsenergie zu erreichen. Die hierfür erforderliche Messung der Fluoreszenz erfolgt dabei direkt am Lasermedium 4, d.h. je nach Ausführung am Kristall bzw. der Faser. Hierzu leitet eine Faser die Fluoreszenz vom Kristall zu einer Photodiode. Das entstehende elektrische Signal wird in der Hardwareanordnung HW verstärkt, durch einen Analog-Digital-Wandler ADC in ein digitales Signal umgesetzt und von einem digitalen Signal-Prozessor DSP verarbeitet. Die Software SW filtert das Signal zur Rauschverminderung in einem digitalen Filter DF und berechnet das Stellsignal BSS für den Verlust-Modulator, z.B. einen akusto-optischen Modulator. Um Nichtlinearitäten auszugleichen, z.B. die einer AOM-Kennlinie, wird das Stellsignal danach linearisiert. Das berechnete digitale Signal LAOM wird wiederum hardwareseitig durch einen Digital-Analog-Wandler DAC in ein analoges Signal umgewandelt, nachfolgend verstärkt und steuert über einen RF-Treiber den AOM als Verlust-Modulator an.

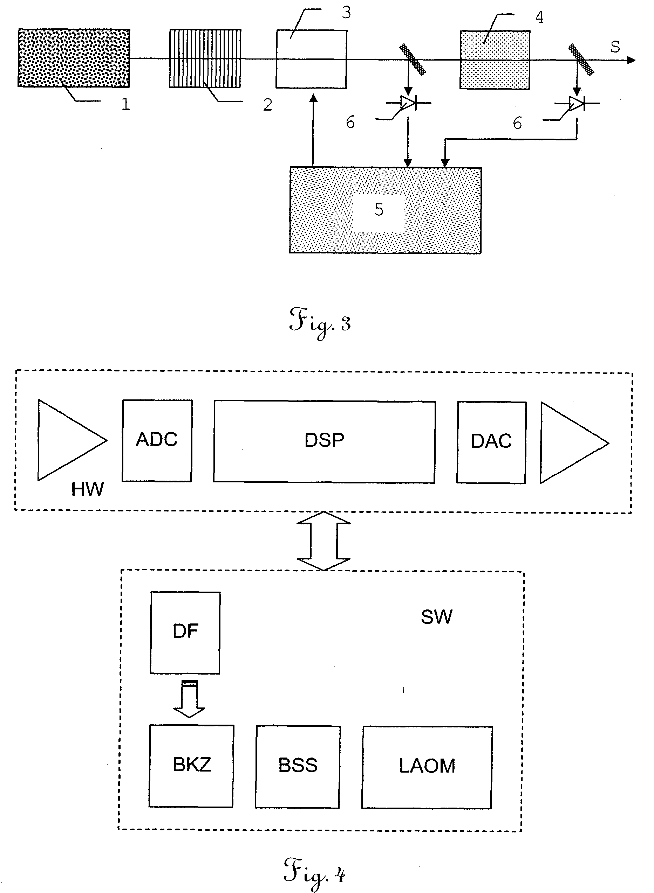

Ein zweites Ausführungsbeispiels eines erfindungsgemässen Laserverstärkungssystems mit einer modellbasierten Berechnung der Verstärkung wird in Fig.3 schematisch dargestellt. Bei einem im Vergleich zum ersten Ausführungsbeispiel grundsätzlich gleichem Aufbau werden in dieser Ausführung die Ein- und Ausgangsenergie gemessen durch zwei dem Lasermedium 4 vor- und nachgelagerte Photodioden 6 gemessen. Im Unterschied zum ersten Ausführungsbeispiel wird hier in der Steuer-/Regelelektronik 5 der Zustand des Lasermediums 4 und dessen Verstärkungsfaktor numerisch modelliert und gerechnet. Nach ersten Berechnungen auf der Basis von startwerten erfolgt ein Abgleich des Modells mit den tatsächlich realisierten Verstärkungen anhand der gemessenen Ein- und Ausgangsenergien.

Fig.4 zeigt die zugehörige schematische Darstellung von Hard- und Softwarekomponenten für das zweite Ausführungsbeispiel.

Im Gegensatz zum ersten Ausführungsbeispiel wird der Zustand des Lasermediums 4, insbesondere der momentane Verstärkungsfaktor, von der Steuer-/Regelelektronik 5 berechnet. In diesem Zusammenhang wird unter Lasermedium ggf. auch eine Mehrzahl von zur Verstärkung verwendeten Laserkristallen verstanden. Ein Abgleich zwischen gerechnetem Model und dem optischen System findet dabei nach jedem Verstärkungsvorgang statt. Bei im Vergleich zum ersten Ausführungsbeispiel gleicher Hardwareanordnung HW der Steuer-/Regelelektronik 5 erfolgt in der Software SW nach einer digitalen Filterung DF die Berechnung des Kristallzustands BKZ, aus dem wiederum das Stellsignal BSS für den Verlust-Modulator berechnet und nachfolgend linearisiert wird.

Die Berechnung des Kristallzustands BKZ basiert auf der numerischen Modellierung des Kristalls, für die bspw. die beiden Differentialgleichungen für den Verstärkungsfaktor g und die Energie E verwendet werden können, wobei die Gleichungen für eine Verstärkeranordnung mit einem oder mehreren in einem Resonator angeordneten Laserkristallen als Lasermedium wie folgt lauten können

$$\frac{dg}{dt} = \frac{g_0 - g}{\tau_L} - \frac{gE}{E_{sat}T_R}$$

$$\frac{dE}{dt} = \frac{E}{T_R}(g - l_{para} - l_{mod})$$

(1) und (2)

Die erste Gleichung beschreibt die Inversion und somit die Verstärkung des 4-Niveau-Systems welche an die extrahierte Laser-Energie (zweite Gleichung) gekoppelt ist. Im einzelnen gelten folgende Beziehungen.

| | |
|---|---|
| $g$ | momentane Verstärkung bzw. Umlauf-Verstärkungskonstante |
| $g_0$ | Kleinsignal-Verstärkungskonstante |
| $\tau_L$ | Lebensdauer des oberen Laserniveaus |
| $E$ | Pulsenergie |
| $E_{sat}$ | Sättigungsenergie |
| $T_R$ | Resonatorumlaufzeit |
| $l_{para}$ | Parasitäre Verlustkonstante |
| $l_{mod}$ | einstellbarer Modulationsverlust |

Zu Beginn wird die erste Gleichung für E = 0 gelöst und nach jedem Verstärkungsvorgang aus Eingangs-Energie und Ausgangs-Energie ein Abgleich des Modells mit dem tatsächlich vorhanden Verstärkungsfaktor durchgeführt.

Grundsätzlich kann die modellbasierte. Berechnung des Verstärkungsfaktors aber auch durch weitere Meßgrößen, wie z.B. eine Fluoreszenzmessung, unterstützt oder ergänzt werden.

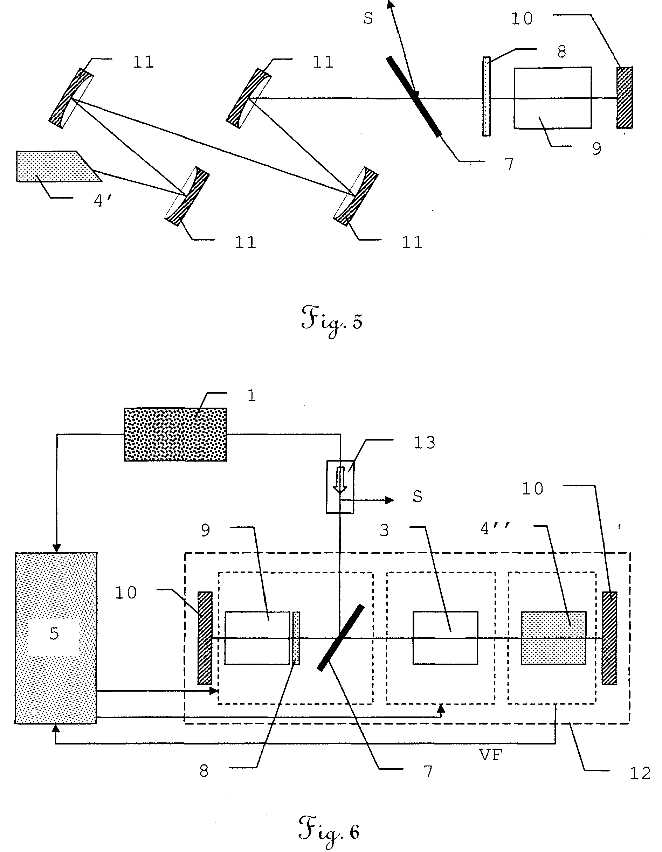

In Fig.5 wird als ein Anwendungsfall die Kavität mit den gattungsgemässen Systemkomponenten eines Laserverstärkungssystems nach dem Prinzip des wiederherstellbaren Verstärkers nach dem Stand der Technik dargestellt. Ein polarisierter Saat-Laserpuls von einer Saat-Laserquelle wird über einen Polarisator 7 in die Anordnung eingekoppelt und von einem Spiegel 10 nach dem Durchgang durch einen elektrooptischen Schalt-Modulator 9, wie z.B. eine Pockels-Zelle, und ein Viertelwellenplättchen 8 reflektiert. In Abhängigkeit von der an den elektrooptischen Schalt-Modulator 9 angelegten Spannung wird die Polarisationsebene des Laserstrahls gedreht, so dass der Polarisator 7 passiert werden kann. Durch eine entsprechende Schaltung können damit sowohl Pulse in die Anordnung ein- als auch als Laserpuls S ausgekoppelt werden. Der elektrooptische Schalt-Modulator 9 bildet damit im Zusammenspiel mit dem Polarisator 7 einen extern steuerbaren Schalter, durch den ein Lichtpuls wahlweise ein- und ausgekoppelt und die Resonatorgüte gesteuert werden kann. Ist ein Puls eingekoppelt und damit innerhalb des Resonators gefangen, wird er bei jedem Durchgang durch das Lasermedium 4' verstärkt, wobei mehrfache Reflexionen an Faltspiegeln 11 erfolgt. Das Lasermedium 4' wird durch eine externe, hier nicht dargestellte, Laserdiodenquelle optisch gepumpt und kann beispielsweise als Kristall oder auch als Faser ausgebildet sein, wobei eine der Flächen des Lasermediums 4' in aus dem Stand der Technik bekannter Weise als Resonatorspiegel dient. Nach einer gewissen Anzahl von Resonatorumläufen und Durchgängen durch das verstärkende Lasermedium 4' wird der Puls durch eine erneute Rotation der Polarisation durch Schalten des elektrooptischen Schalt-Modulators 9 über den Polarisator 7 als Laserpuls S ausgekoppelt. Diese Anordnung stellt hierbei in der Ausbildung und Anordnung der Komponenten lediglich ein Beispiel für einen wiederherstellbaren oder regenerativen Verstärker dar. Insbesondere können zur Strahlführung auch faseroptische Komponenten Verwendung finden.

Ein drittes Ausführungsbeispiel des erfindungsgemässen Laserverstärkungssystems wird in Fig. 6 exemplarisch für ein von einer Laserbearbeitungsanlage mit Scanner gesteuertem Ultrakurzpulslasersystem dargestellt.

Das erfindungsgemässe Laserverstärkungssystem weist einen im Grundsatz mit dem Beispiel des Stands der Technik aus Fig. 5 vergleichbaren regenerativen Verstärker 12 mit einem oder mehreren verstärkenden Lasermedien 4'', einem Laserresonator mit zwei Resonatorspiegeln 10, einem Dünnschichtpolarisator als Polarisator 7 und einem ersten elektro-optischem Schalt-Modulator 9 auf. Erfindungsgemäss ist innerhalb des Laserresonators wenigstens ein zweiter akusto- oder elektro-optischer Verlust-Modulator 3 zur Steuerung des Pulsenergieverlustes angeordnet, so dass Pulsdauer und/oder Pulsenergie der Laserpulse S durch ein aktives Modulieren des Resonatorverlustes verändert werden können. Grundsätzlich können jedoch auch weitere Modulatoren, d.h. beispielsweise ein dritter oder vierter Modulator oder aber Kombinationen von Modulatoren verwendet werden. Dieses Modulieren des Resonatorverlusts kann dabei durch ein Steuern oder Regeln erfolgen, wofür im Stand der Technik grundsätzlich eine Vielzahl von Ansätzen zur Verfügung steht. Durch eine solche Regelung oder Steuerung des Resonatorverlustes werden Laserpulse mit einer vorgegebenen Pulswiederholrate und/oder Pulsenergie abrufbar bereit-gestellt, so dass eine anwendungsgerechte Versorgung mit Laserpulsen S der gewünschten zeitlichen und energetischen Charakteristik möglich ist.

Eine konkrete Möglichkeit der Regelung des Resonatorverlustes ist die Verwendung eines die Verstärker-Fluoreszenz repräsentierendes Signals VF als Feedbacksignal. Die Steuerung des Resonatorverlustes kann beispielsweise über eine Look-up-Tabelle erfolgen.

Weitere Komponenten sind ein Saatoszillator als Laserquelle 1 zur Bereitstellung der zu verstärkenden Pulse, eine Steuer-/Regelelektronik 5 für den ersten und den zweiten Modulator 3,9 sowie ein optischer Isolator 13 zur Trennung und Auskopplung der abrufbaren Laserpulse S als zu nutzende Emission.

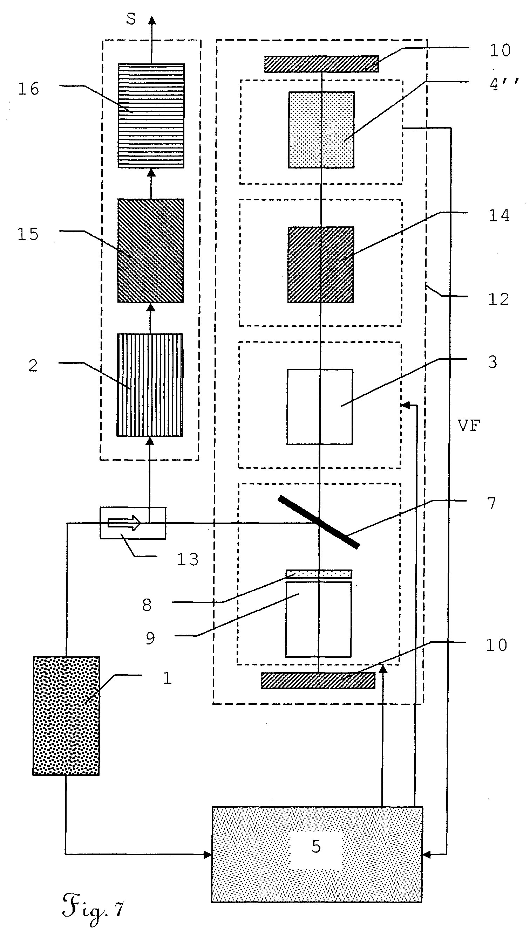

Ein viertes Ausführungsbeispiel des erfindungsgemässen Laserverstärkungssystems mit weiteren Komponenten zur Erzeugung Höherharmonischer wird in Fig.7 erläutert. Der Grundaufbau entspricht hierbei dem dritten Ausführungsbeispiel aus Fig.6, wobei allerdings ein Pulstrecker 14 innerhalb des Laserresonators und einem Pulskompressor 15 außerhalb des Laserresonators angeordnet sind, welche eine gechirpte Pulsverstärkung nach ansonsten bekannten Verfahren des Stands der Technik ermöglichen, wie sie beispielsweise aus der EP 1 687 876 bekannt sind. Durch geeignet Konfiguration des Pulskompressors 15 kann die Pulslänge gegenüber dem Saatpuls verlängert werden. Grundsätzlich kann der Pulsstrecker jedoch auch an anderer Stelle, insbesondere auch ausserhalb des Laserresonators angeordnet werden.

Zur gezielten Auswahl und zum Abruf der Laserpulse S ist dem Isolator 13 ein Puls-Picker oder Pulsselektor 2 nachgeschaltet, dem in diesem Ausführungsbeispiel nichtlineare Konversionsstufen 16 zur Erzeugung der zweiten und/oder höheren Harmonischen folgen.

Als Beispiel für die Operation eines verlustgeregelten regenerativen Verstärkers zeigen die numerischen Simulationen wie sich beispielsweise eine Repetitionsratenänderung auf einen ungeregelten und im Vergleich dazu auf einen geregelten Verstärker auswirkt. Das simulierte System enthält 4 Laserkristalle als Lasermedium bzw.

Verstärkungsmedien und wurde so ausgelegt, dass Verstärkerleistungen von 100W und grösser bei Repetitionsraten von 100-3000 kHz erreicht werden können. Zur Veranschaulichung der Situation im regenerativen Verstärker mit Verlustmodulation werden die Gleichungen (1) und (2) analysiert und numerisch integriert.

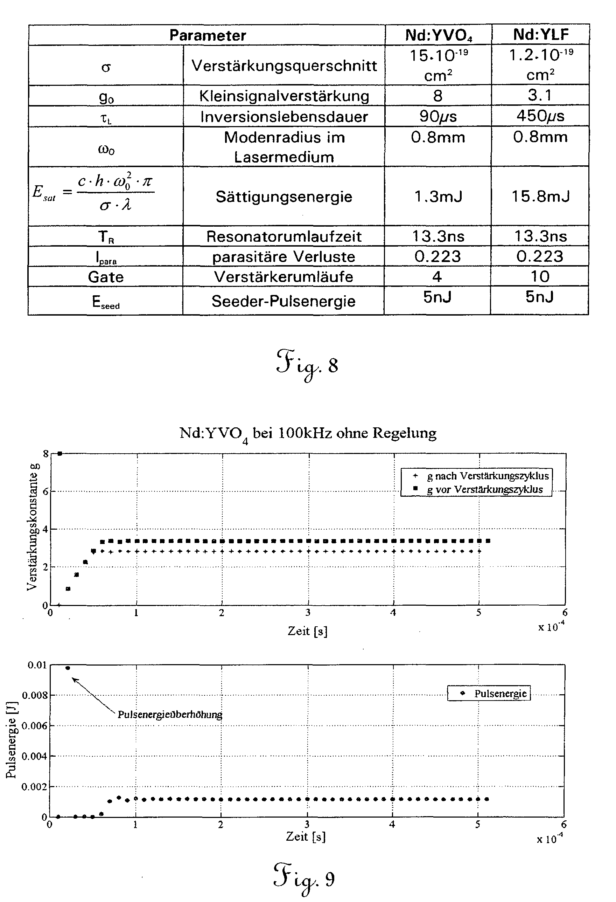

Die folgenden Fig.8-18 zeigen Simulationen zur Veranschaulichung der Effizienz der Regelung für zwei Systeme mit den Lasermedien $Nd:YVO_4$ und Nd:YLF mit jeweils 4 Laserkristallen, wobei die relevanten Simulationsparameter in Fig.8 in Form einer Übersicht angegeben werden.

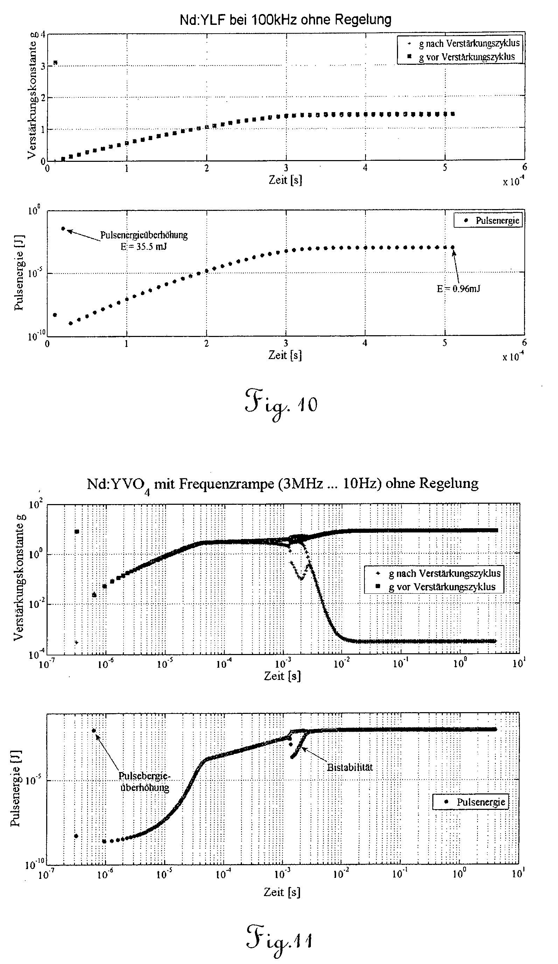

Fig.9 und 10 zeigen jeweils die Pulsenergie E und die Umlaufverstärkungskonstante g für einen $Nd:YVO_4$ und einen Nd:YLF regenerativen Verstärker bei einer Repetitionsrate von 100kHz. Diese Simulationen dienen zur Veranschaulichung der dynamischen Verhältnisse, wobei die Verlustmodulation deaktiviert wurde. Die parasitären Verlustkonstanten in beiden Simulationen waren 0,223, was 20% Verlust entspricht.

Klar ersichtlich sind die anfängliche Pulsenergieüberhöhung sowie die Zeit zur Erreichung des eingeschwungenen Zustandes. Im Fall von $Nd:YVO_4$ ist die Pulsüberhöhung 10-fach, bei Nd:YLF ist sie aufgrund der längeren Lebensdauer im oberen Laserniveau sowie des geringeren Verstärkungsquerschnittes 35-fach. Nicht nur für die Applikation, sondern auch für den Verstärker selbst sind derartig hohe Pulsenergien in der Regel nicht akzeptabel und werden zur Vermeidung von Nichtlinearitäten typischerweise unter 1mJ gehalten.

Desweiteren ist erkennbar, dass die Differenz zwischen der Verstärkungskonstante g vor und nach einem Verstärkungszyklus relativ gering ist, somit auch die Änderung von g während der Verstärkung. Bei einer extrahierten Pulsenergie von ca. 1mJ entspricht dies < 10% bei $Nd:YVO_4$ und ca. 1% bei Nd:YLF.

Gleichung (2) zeigt, dass diese von Gleichung (1) entkoppelt wird, wenn aufgrund der nur geringfügigen Änderung von g während des Verstärkungsvorganges g in erster Näherung als konstant betrachtet wird. Eine Bedingung für konstante Ausgangsenergie des Verstärkers kann nun einfach wie folgt formuliert werden:

$$g - l_{para} - l_{mod} = \kappa = const. \qquad (3)$$

Der Parameter $\kappa$ spielt hierbei die Rolle einer Sollgrösse für die Pulsenergie, welche dem System vorgegeben wird. Gleichzeitig wird vor jedem Verstärkungsvorgang die momentane Verstärkung g gemessen, was z. B. mittels Messung der Fluoreszenz des Verstärkers mit einer Photodiode bewerkstelligt werden kann. Schliesslich wird dann der resonatorinterne Verlustmodulator $l_{mod}$ so eingestellt bzw. gesteuert oder geregelt, dass Gleichung (3) erfüllt ist und der Verstärker somit die dem Sollwert $\kappa$ entsprechende Energie produziert. Im Fall der Regelung auf eine konstante Verstärker-Pulsenergie geschieht dies bspw. ohne jegliche Änderung der Verstärkungszeit bzw. Gatelänge, Pumpbedingung und Seeder-Pulsenergie, nur durch die Messung der Verstärkung g und der Einstellung des Resonatorverlustes $l_{mod}$ (z. B. mittels AOM oder EOM). Der Verstärker kann nun auch aperiodisch beliebig getriggert werden.

Hierbei sind folgende Punkte zu beachten.

- Die dem Sollwert $\kappa$ entsprechende Pulsenergie kann von der Regelung nur dann gehalten werden, wenn die abgefragte Repetitionsrate kleiner oder gleich der Rate ist, bei welcher der eingeschwungene Verstärker diese Energie produzieren kann ($l_{mod} = 0$). Jedoch können auch Bursts mit höherer Pulsrate erzeugt werden.

- Da die Regelung im wesentlichen auf einer vernachlässigbaren Verstärkungssättigung durch den Einzelpuls beruht, wird deren Güte nur bei kleinen, durch den Verstärkungsvorgang verursachten Änderungen $\Delta g$ der Verstärkung gewährleistet sein.

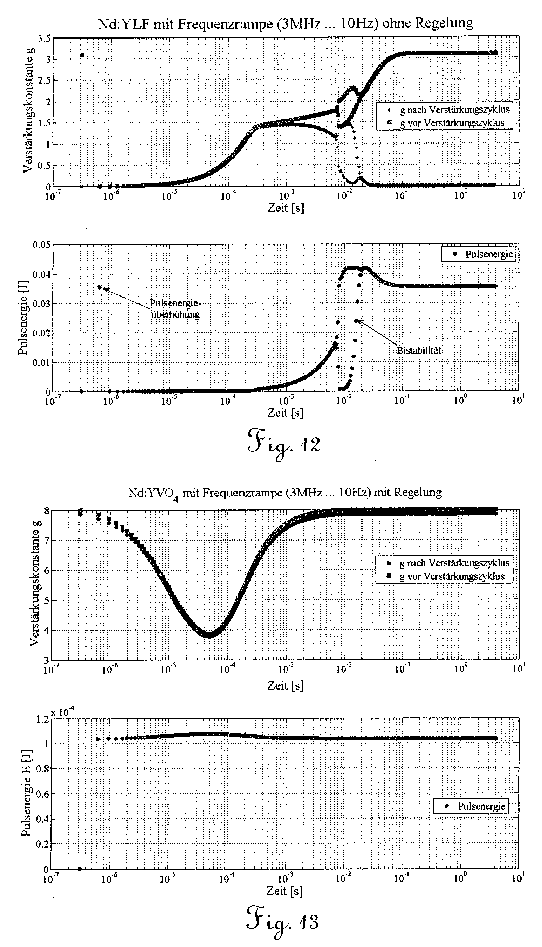

Fig.11 und Fig.12 zeigen Verstärkungskonstante und Pulsenergie für das vierte und fünfte Beispiel eines Verstärkersystems bei Durchlaufen einer Frequenzrampe ohne erfindungsgemässe Regelung. Hierbei erfolgt eine Frequenzänderung von 3 MHz auf 10 Hz innerhalb von ca. 4 s.

Wie sich eindeutig zeigt, erfährt der Verstärker durch die Frequenzdurchstimmung nicht nur eine markante Änderung der Pulsenergie, sondern es ergeben sich auch Bereiche der Bistabilität. Auch ist die anfängliche Pulsüberhöhung gegeben.

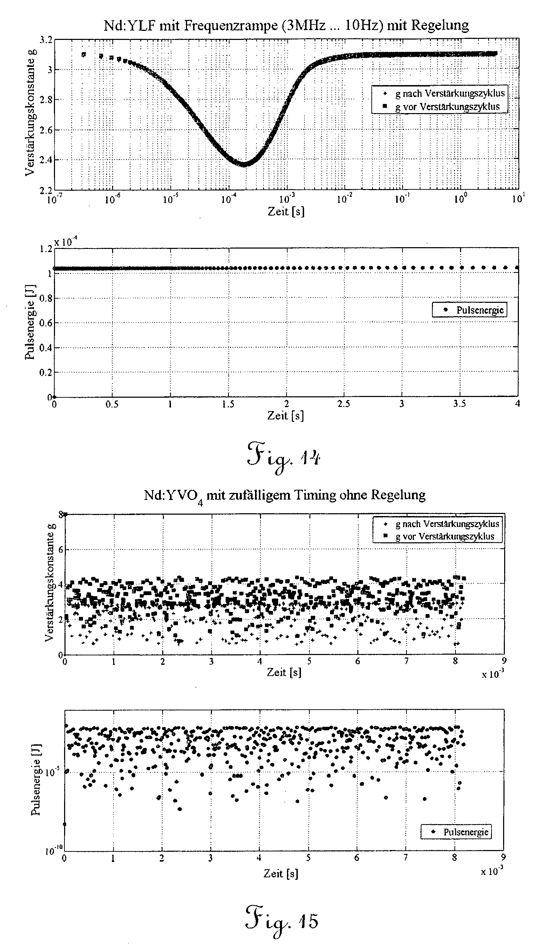

In den Fig.13 und Fig.14 werden Verstärkungskonstante und Pulsenergie für das vierte und fünfte Beispiel eines Verstärkersystems bei Durchlaufen der gleichen Frequenzrampe mit erfindungsgemässer Regelung dargestellt.

Die eingestellte Energie von ca. 100μJ wird von der Regelung sehr gut gehalten. Lediglich bei Nd:YVO$_4$ ergibt sich eine geringfügige Abweichung von < 5%. Da die extrahierbare Leistung in diesem Verstärker ca. 100 W beträgt, entspricht die Pulsenergie am Start der Frequenzrampe, d.h. bei 3 MHz, nicht der Energie für den eingeschwungenen Zustand des Verstärkers. Jedoch kann durch die Regelung die Energie gehalten werden bis die Frequenz auf < 1 MHz fällt. Auch die anfängliche Pulsenergieüberhöhung kann ausgeregelt werden.

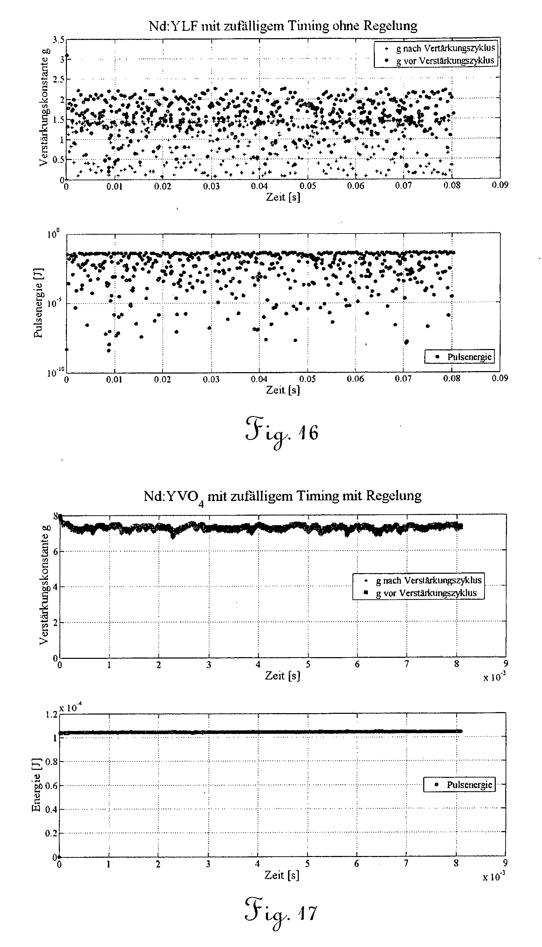

Fig.15 und Fig.16 zeigen Verstärkungskonstante und Pulsenergie für das vierte Beispiel eines Verstärkersystems mit zufälligem Timing ohne erfindungsgemässe Regelung.

Erwartungsgemäss reagieren beide Verstärker auf eine zeitlich beliebige Pulsabfragefolge entsprechend chaotisch.

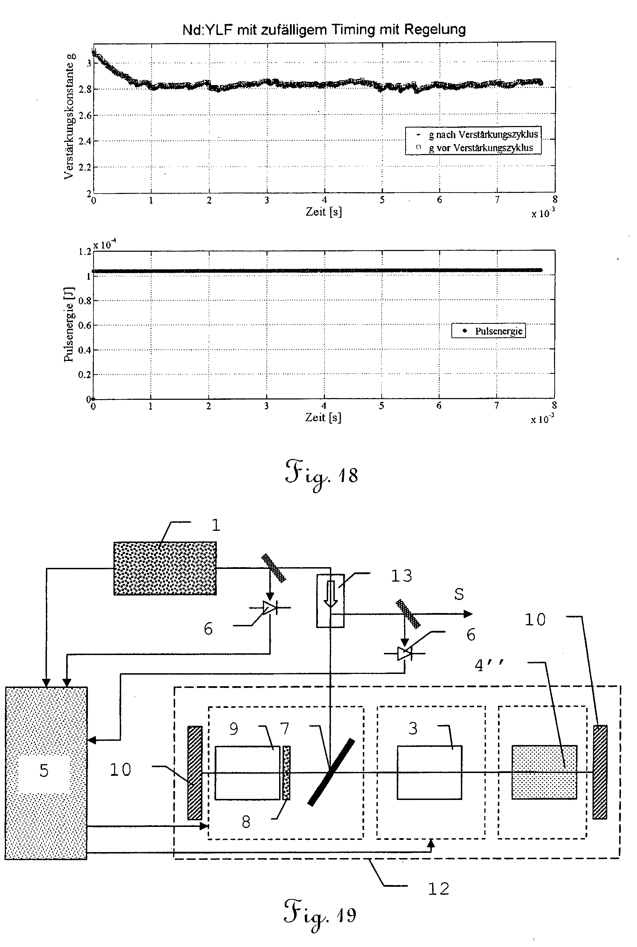

Hingegen wird die eingestellte Energie von ca. 100 μJ bei erfindungsgemässer Regelung sehr gut gehalten, wie in den Fig.17 und Fig.18 dargestellt. Lediglich bei Nd:YVO$_4$ ergibt sich eine geringfügige Erhöhung des Pulsrauschens. Eine erfindungsgemässe Weiterbildung des Konzeptes ist es, auch den Sollwertparameter $\kappa$ für die Energie in den erlaubten Grenzen einstellbar zu machen, wodurch neben der zeitlichen "pulse-on-demand" Funktion auch eine freie Wahl der Pulsenergie möglich wird.

Fig.19 zeigt die schematische Darstellung eines sechsten Ausführungsbeispiels des erfindungsgemässen Laserverstärkungssystems nach dem Prinzip des wiederherstellbaren Verstärkers mit modellbasierter Berechnung der Verstärkung. Die Laseranordnung entspricht grundsätzlich dem dritten Ausführungsbeispiel, wobei allerdings keine Fluoreszenz-Messanordnung verwendet wird. Hingegen wird vor dem optischen Isolator 13 über einen Teilerspiegel ein Teil des von der Laserquelle 1 erzeugten Laserstrahls ausgekoppelt und durch eine erste Photodiode 6 die Pulsenergie als Eingangsenergie gemessen. In gleicher weise wird nach dem optischen Isolator die Energie des abrufbaren Laserpulses S über eine zweite Photodiode 6 gemessen. Die Berechnung des Kristallzustands basiert auf der numerischen Modellierung des Kristalls und erfolgt gemäss der in Fig.4 erläuterten Vorgehensweise, wobei jedoch auch die Beiträge der weiteren im Resonator vorhandenen Komponenten, wie z.B. die durch den Schalt-Modulator 9 erzeugten Verluste, berücksichtigt und modelliert werden können. Zur weiteren Verbesserung der modellbasierten Steuerung können auch an weiteren Positionen im Strahlgang bzw. im Resonator zusätzliche Messungen der Pulsenergie vorgenommen werden.

Der beschriebene Mechanismus zur Unterdrückung von Pulsüberhöhungen ist prinzipiell unabhängig von der Ausführung des Verstärkungsmediums. Insbesondere ist eine Realisierung des beschriebenen Laserverstärkungssystems mit dem verstärkende Lasermedium und/oder anderen funktionalen Komponenten in Faserbauweise erfindungsgemäss realisierbar.

**Patentansprüche**

1. Laserverstärkungssystem zur Erzeugung von abrufbaren Laserpulsen mit einer vorgegebenen Pulszeit und/oder Pulsenergie mit mindestens

• einer Laserquelle (1), insbesondere mit einem nachgeschalteten Pulsselektor (2) zur gezielten Auswahl von zu verstärkenden Laserpulsen,
• einem Lasermedium (4,4'') zur Verstärkung von durch die Laserquelle erzeugten Laserpulsen,
• einem, insbesondere akusto- oder elektrooptischen, Verlust-Modulator (3) und
• einer Steuerkomponente, insbesondere Steuer-/Regelelektronik (5), für den Verlust-Modulator (3), wobei der Verlust-Modulator (3) so angeordnet und geschaltet ist, dass dieser die Verstärkung der Laserpulse durch das Lasermedium (4,4'') durch Verlusterzeugung moduliert, so dass die abrufbaren Laserpulse (S) mit einer vorgegebenen Pulszeit und/oder Pulsenergie bereitgestellt werden,

**dadurch gekennzeichnet, dass** vor einem Verstärkungsvorgang für einen der Laserpulse die jeweils momentane Verstärkung des Lasermediums (4, 4'') bestimmt und die Verlusterzeugung durch den Verlust-Modulator (3) in Abhängigkeit von der momentanen Verstärkung des Lasermediums (4, 4'') mittels der Steuerkomponente geregelt oder gesteuert wird.

2. Laserverstärkungssystem nach Anspruch 1,
   **gekennzeichnet durch**
   die Steuerkomponente, welche den aktuellen Zustand des Lasermediums (4, 4'') auf Basis eines, insbesondere numerischen, Modells für den Zustand des Lasermediums (4, 4'') berechnet.

3. Laserverstärkungssystem nach Anspruch 2,
   **gekennzeichnet durch**
   eine Meßschaltung, welche die Energien des Laserpulses vor und nach dem Verstärkungsvorgang mißt.

4. Laserverstärkungssystem nach einem der vorangehenden Ansprüche,
   **dadurch gekennzeichnet, dass**
   die Verlusterzeugung anhand einer Look-up-Tabelle gesteuert wird,

5. Laserverstärkungssystem nach Anspruch 1,
   **gekennzeichnet durch**
   eine Fluoreszenzmeßanordnung zur Bestimmung der Verstärkung des Lasermediums (4, 4'') aus einer Messung der Fluoreszenz des Lasermediums (4, 4''), insbesondere zur Regelung der Verlusterzeugung **durch** ein die Verstärker-Fluoreszenz repräsentierendes Feedbacksignal (VF).

6. Laserverstärkungssystem nach einem der vorangehenden Ansprüche,
   **gekennzeichnet durch**
   einen regenerativen Verstärker mit wenigstens

   - einem Laserresonator mit mindestens einem Resonatorspiegel (10), und
   - einer Schaltanordnung mit mindestens einem Polarisator (7), insbesondere einem Dünnschichtpolarisator, und einem, insbesondere elektrooptischen, Schalt-Modulator (9), insbesondere mit einer Steuer-/Regelelektronik (5) für den Schalt-Modulator (9) und den Verlust-Modulator (3).

7. Laserverstärkungssystem nach einem der vorangehenden Ansprüche,
   **gekennzeichnet durch**
   einen Pulskompressor (15) und einen Pulsstrecker (14).

8. Laserverstärkungssystem nach einem der vorangehenden Ansprüche,
   **gekennzeichnet durch**
   eine nichtlineare optische Konversionsstufe (16), insbesondere zur Erzeugung der zweiten oder dritten Harmonischen.

9. Laserverstärkungssystem nach einem der vorangehenden Ansprüche,
   **dadurch gekennzeichnet, dass**
   wenigstens das verstärkende Lasermedium in Faserbauweise ausgeführt ist.

10. Laserverstärkungsverfahren zur Erzeugung von abrufbaren Laserpulsen mit einer vorgegebenen Puls zeit und/oder Pulsenergie mit mindestens

- einer Laserquelle (1);
- einem Lasermediums (4, 4'') zur Verstärkung von durch die Laserquelle erzeugten Laserpulsen,
- einem, insbesondere akusto- oder elektrooptischen, Verlust-Modulator (3), und
- einer Steuerkomponente, insbesondere Steuer-/Regelelektronik (5), für den Verlust-Modulator (3),

und einem

- Erzeugen von zu verstärkenden Laserpulsen durch die Laserquelle, insbesondere mit einem Selektieren des Laserpulses aus einer Vielzahl von erzeugten Pulsen,
- Verstärken des Laserpulses durch das Lasermedium (4, 4''),
- Bereitstellen des verstärkten Laserpulses als abrufbarer Laserpuls (S),

wobei der Verlust-Modulator (13) die Verstärkung der Laserpulse durch das Lasermedium (4, 4'') durch Verlusterzeugung moduliert, so dass die abrufbaren Laserpulse (S) mit einer vorgegebenen Pulszeit und/oder Pulsenergie bereitgestellt werden,
**dadurch gekennzeichnet, dass**
vor dem Verstärken des Laserpulses die jeweils momentane Verstärkung des Lasermediums (4, 4'') bestimmt und die Verlusterzeugung durch den Verlust-Modulator (3) in Abhängigkeit von der momentanen Verstärkung des Lasermediums (4, 4'') mittels der Steuerkomponente geregelt oder gesteuert wird.

11. Laserverstärkungsverfahren nach Anspruch 10,
**dadurch gekennzeichnet, dass**
die momentane Verstärkung des Lasermediums (4, 4'') auf Basis eines Modells für den Zustand des Lasermediums (4, 4'') berechnet wird.

12. Laserverstärkungsverfahren nach Anspruch 11,
**dadurch gekennzeichnet, dass**
die momentane Verstärkung des Lasermediums (4, 4'') durch das numerischen Lösen der Differentialgleichungen

$$\frac{dg}{dt} = \frac{g_0 - g}{\tau_L} - \frac{gE}{E_{sat}T_R}$$

$$\frac{dE}{dt} = \frac{E}{T_R}(g - l_{para} - l_{mod})$$

Geänderte Ansprüche in Reinschrift
bestimmt wird, wobei die folgenden Bezeichnungen gelten

g momentane Verstärkung,
$g_0$ Kleinsignal-Verstärkungskonstante,
$\tau_L$ Lebensdauer des oberen Laserniveaus,
E Pulsenergie,
$E_{sat}$ Sättigungsenergie,
$T_R$ Resonatorumlaufzeit,
$l_{para}$ parasitäre Verlustkonstante,
$l_{mod}$ einstellbarer Modulationsverlust.

13. Laserverstärkungsverfahren nach einem der Ansprüche 10 bis 12,
**dadurch gekennzeichnet, dass**
die Steuerung der Verlusterzeugung über eine Look-up-Tabelle erfolgt.

14. Laserverstärkungsverfahren nach einem der Ansprüche 10 bis 13,
**dadurch gekennzeichnet, dass**
vor und nach dem Verstärkungsvorgang die Energien des Laserpulses gemessen werden und eine Anpassung des Modells anhand des Abgleichs von berechneter und tatsächlicher momentaner Verstärkung erfolgt.

**15.** Laserverstärkungsverfahren nach Anspruch 10,
**dadurch gekennzeichnet, dass**
die momentane Verstärkung des Lasermediums (4, 4'') durch eine Messung der Fluoreszenz des Lasermediums (4, 4'') bestimmt wird, insbesondere die Regelung der Verlusterzeugung durch ein die Verstärker-Fluoreszenz repräsentierendes Feedbacksignal (VF) erfolgt.

## Claims

**1.** Laser amplification system for generating retrievable laser pulses having a predefined pulse time and/or pulse energy comprising at least

• a laser source (1), in particular with a downstream pulse selector (2) for the targeted selection of laser pulses to be amplified,
• a laser medium (4, 4'') for amplifying laser pulses generated by the laser source,
• a, particularly acousto- or electro-optical, loss modulator (3) and
• a control component, in particular a control/regulation electronic unit (5), for the loss modulator (3),

wherein the loss modulator (3) is arranged and switched such that it modulates the amplification of the laser pulses by the laser medium (4, 4'') by loss generation, such that the retrievable laser pulses (S) are provided with a predefined pulse time and/or pulse energy,
**characterized in that**
before an amplification process for one of the laser pulses the respective instantaneous gain of the laser medium (4, 4'') is determined and the loss generation by the loss modulator (3) is regulated or controlled by the control component depending on the instantaneous gain of the laser medium (4, 4'').

**2.** Laser amplification system according to Claim 1, **characterized by**
the control component, which calculates the present state of the laser medium (4, 4'') on the basis of a, particularly numerical, model for the state of the laser medium (4, 4'').

**3.** Laser amplification system according to Claim 2,
**characterized by**
a measuring circuit, which measures the energies of the laser pulse before and after the amplification process.

**4.** Laser amplification system according to any one of the preceding claims,
**characterized in that**
the loss generation is controlled by means of a look-up table.

**5.** Laser amplification system according to Claim 1,
**characterized by**
a fluorescence measuring arrangement for determining the gain of the laser medium (4, 4'') from a measurement of the fluorescence of the laser medium (4, 4''), in particular for regulation of the loss generation by a feedback signal (VF) representing the amplifier fluorescence.

**6.** Laser amplification system according to any one of the preceding claims,
**characterized by**
a regenerative amplifier comprising at least

- a laser resonator having at least one resonator mirror (10), and
- a switching arrangement having at least one polarizer (7), in particular a thin-film polarizer, and a, particularly electro-optical, switching modulator (9), in particular with a control/regulation electronic unit (5) for the switching modulator (9) and the loss modulator (3).

**7.** Laser amplification system according to any one of the preceding claims,
**characterized by**
a pulse compressor (15) and a pulse stretcher (14).

**8.** Laser amplification system according to any one of the preceding claims,

**characterized by**
a nonlinear optical conversion stage (16), in particular for generating the second or third harmonic.

9. Laser amplification system according to any one of the preceding claims,
**characterized in that**
at least the amplifying laser medium is embodied in a fiber design.

10. Laser amplification method for generating retrievable laser pulses having a predefined pulse time and/or pulse energy comprising at least

- a laser source (1);
- a laser medium (4,4") for amplifying laser pulses generated by the laser source,
- a, particularly acousto- or electro-optical, loss modulator (3), and
- a control component, in particular a control/regulation electronic unit (5), for the loss modulator (3),

and

- generation of laser pulses to be amplified by the laser source, in particular with a selection of the laser pulse from a multiplicity of generated pulses,
- amplification of the laser pulse by the laser medium (4, 4''),
- providing the amplified laser pulse as a retrievable laser pulse (S),

wherein the loss modulator (13) modulates the amplification of the laser pulses by the laser medium (4, 4'') by loss generation, such that the retrievable laser pulses (S) are provided with a predefined pulse time and/or pulse energy,
**characterized in that**
before the amplification of the laser pulse the respective instantaneous gain of. the laser medium (4, 4'') is determined and the loss generation by the loss modulator (3) is regulated or controlled by the control component depending on the instantaneous gain of the laser medium (4, 4'').

11. Laser amplification method according to Claim 10,
**characterized in that**

the instantaneous gain of the laser medium (4, 4'') is calculated on the basis of a model for the state of the laser medium (4, 4'').

12. Laser amplification method according to Claim 11,
**characterized in that**
the instantaneous gain of the laser medium (4, 4'') is determined by the numerical solution of the differential equations

$$\frac{dg}{dt} = \frac{g_0 - g}{\tau_L} - \frac{gE}{E_{sat} T_R}$$

$$\frac{dE}{dt} = \frac{E}{T_R}(g - l_{para} - l_{mod})$$

wherein the following designations are applicable

g instantaneous gain,
$g_0$ small-signal gain constant,
$\tau_L$ lifetime of the upper laser level,
E pulse energy,
$E_{sat}$ saturation energy,
$T_R$ resonator circulation time,
$l_{para}$ parasitic loss constant,
$l_{mod}$ adjustable modulation loss.

**13.** Laser amplification method according to any one of Claims 10 to 12,
**characterized in that**
the control of the loss generation is effected by means of a look-up table.

**14.** Laser amplification method according to any one of Claims 10 to 13,
**characterized in that**
before and after the amplification process the energies of the laser pulse are measured and the model is adapted on the basis of matching calculated and actual instantaneous gain.

**15.** Laser amplification method according to Claim 10,
**characterized in that**
the instantaneous gain of the laser medium (4, 4'') is determined by a measurement of the fluorescence of the laser medium (4, 4''), in particular the regulation of the loss generation is effected by a feedback signal (VF) representing the amplifier fluorescence.


**Revendications**

**1.** Système d'amplification de laser pour générer des impulsions laser disponibles avec une durée d'impulsion et/ou une énergie d'impulsion prédéfinie avec au moins

• une source laser (1), en particulier avec un sélecteur d'impulsions monté en aval (2) pour la sélection ciblée d'impulsions laser à renforcer,
• un milieu laser (4,4") pour amplifier les impulsions laser générées par la source laser,
• un modulateur de perte (3), en particulier acousto-optique ou électro-optique et
• une composante de commande, en particulier une électronique de commande/de régulation (5) pour le modulateur de perte (3),

cependant que le modulateur de perte (3) est placé et commuté de telle manière que celui-ci module l'amplification des impulsions laser par le milieu laser par génération de perte si bien que les impulsions laser disponibles (S) sont mises à disposition avec une durée d'impulsion et/ou une énergie d'impulsion prédéfinie,
**caractérisé en ce que** l'amplification respectivement momentanée du milieu laser (4,4") est déterminée avant une opération d'amplification pour l'une des impulsions laser et la génération de perte par le modulateur de perte (3) est régulée ou commandée au moyen de la composante de commande en fonction de l'amplification momentanée du milieu laser (4,4").

**2.** Système d'amplification de laser selon la revendication 1, **caractérisé par** la composante de commande qui calcule l'état actuel du milieu laser (4,4") sur la base d'un modèle, en particulier numérique, pour l'état du milieu laser (4,4").

**3.** Système d'amplification de laser selon la revendication 2, **caractérisé par** un circuit de mesure qui mesure les énergies de l'impulsion laser avant et après l'opération d'amplification.

**4.** Système d'amplification de laser selon l'une des revendications précédentes, **caractérisé en ce que** la génération de perte est commandée à l'aide d'une table de conversion.

**5.** Système d'amplification de laser selon la revendication 1, **caractérisé par** un dispositif de mesure de fluorescence pour déterminer l'amplification du milieu laser (4,4") à partir d'une mesure de la fluorescence du milieu laser (4,4"), en particulier pour la régulation de la génération de perte par un signal de retour (VF) qui représente la fluorescence de l'amplificateur.

**6.** Système d'amplification de laser selon l'une des revendications précédentes, **caractérisé par** un amplificateur régénératif avec au moins

- un résonateur laser avec au moins un miroir de résonateur (10), et
- un dispositif de circuit avec au moins un polarisateur (7), en particulier un polariseur en couche mince, et un modulateur de commutation (9), en particulier électro-optique, en particulier avec une électronique de commande/de régulation (5) pour le modulateur de commutation (9) et le modulateur de perte (3).

**7.** Système d'amplification de laser selon l'une des revendications précédentes, **caractérisé par** un compresseur d'impulsions (15) et un dispositif d'étirement d'impulsions (14).

**8.** Système d'amplification de laser selon l'une des revendications précédentes, **caractérisé par** un étage de conversion optique non-linéaire (16), en particulier pour générer la seconde ou la troisième harmonique.

**9.** Système d'amplification de laser selon l'une des revendications précédentes, **caractérisé en ce qu'**au moins le milieu amplificateur laser est réalisé en fibres.

**10.** Procédé d'amplification de laser pour générer des impulsions laser disponibles avec une durée d'impulsion et/ou une énergie d'impulsion prédéfinie avec au moins

- une source laser (1),
- un milieu laser (4,4") pour amplifier des impulsions laser générées par la source laser,
- un modulateur de perte (3), en particulier acousto-optique ou électro-optique, et
- une composante de commande, en particulier une électronique de commande/de régulation (5), pour le modulateur de perte (3),

et une

- génération d'impulsions laser à amplifier par la source laser, en particulier avec une sélection de l'impulsion laser à partir d'une multitude d'impulsions générées,
- amplification de l'impulsion laser par le milieu laser (4,4")
- mise à disposition de l'impulsion laser renforcée en tant qu'impulsion laser disponible (S),

cependant que le modulateur de perte (13) module l'amplification des impulsions laser par le milieu laser (4,4") par génération de perte si bien que les impulsions laser disponibles (S) sont mises à disposition avec une durée d'impulsion et/ou une énergie d'impulsion prédéfinie,
**caractérisé en ce que** l'amplification respectivement momentanée du milieu laser (4,4") est déterminée avant l'amplification de l'impulsion laser et la génération de perte par le modulateur de perte (3) est régulée ou commandée au moyen de la composante de commande en fonction de l'amplification momentanée du milieu laser (4,4").

**11.** Procédé d'amplification de laser selon la revendication 10, **caractérisé en ce que** l'amplification momentanée du milieu laser (4,4") est calculée sur la base d'un modèle pour l'état du milieu laser (4,4").

**12.** Procédé d'amplification de laser selon la revendication 11, **caractérisé en ce que** l'amplification momentanée du milieu laser (4,4") est déterminée par la résolution numérique des équations différentielles

$$\frac{dg}{dt} = \frac{g_0 - g}{\tau_L} - \frac{gE}{E_{sat}T_R}$$

$$\frac{dE}{dt} = \frac{E}{T_R}(g - l_{para} - l_{mod})$$

cependant que les désignations suivantes s'appliquent :

g amplification momentanée
$g_0$ constante d'amplification de signal faible
$T_L$ durée de vie du niveau laser supérieur
E énergie d'impulsion
$E_{sat}$ énergie de saturation
$T_R$ durée d'aller-retour du résonateur
$l_{para}$ constante de perte parasitaire
$l_{mod}$ perte de modulation réglable.

**13.** Procédé d'amplification de laser selon l'une des revendications 10 à 12, **caractérisé en ce que** la commande de la génération de perte se fait par une table de conversion.

**14.** Procédé d'amplification de laser selon l'une des revendications 10 à 13, **caractérisé en ce que** les énergies de l'impulsion laser sont mesurées avant et après l'opération d'amplification et qu'une adaptation du modèle se fait à l'aide d'une comparaison de l'amplification calculée et de l'amplification momentanée effective.

**15.** Procédé d'amplification selon la revendication 10, **caractérisé en ce que** l'amplification momentanée du milieu laser (4,4") est déterminée par une mesure de la fluorescence du milieu laser (4,4"), en particulier la régulation de la génération de perte se fait par un signal de retour (VF) qui représente la fluorescence de l'amplificateur.

*Fig. 1*

*Fig. 2*

Fig. 3

Fig. 4

$\mathcal{F}ig.\,5$

$\mathcal{F}ig.\,6$

$\mathcal{F}ig.$ 7

| Parameter | | Nd:YVO$_4$ | Nd:YLF |
|---|---|---|---|
| $\sigma$ | Verstärkungsquerschnitt | $15 \cdot 10^{-19}$ cm$^2$ | $1.2 \cdot 10^{-19}$ cm$^2$ |
| $g_0$ | Kleinsignalverstärkung | 8 | 3.1 |
| $\tau_L$ | Inversionslebensdauer | 90$\mu$s | 450$\mu$s |
| $\omega_0$ | Modenradius im Lasermedium | 0.8mm | 0.8mm |
| $E_{sat} = \dfrac{c \cdot h \cdot \omega_0^2 \cdot \pi}{\sigma \cdot \lambda}$ | Sättigungsenergie | 1.3mJ | 15.8mJ |
| $T_R$ | Resonatorumlaufzeit | 13.3ns | 13.3ns |
| $I_{para}$ | parasitäre Verluste | 0.223 | 0.223 |
| Gate | Verstärkerumläufe | 4 | 10 |
| $E_{seed}$ | Seeder-Pulsenergie | 5nJ | 5nJ |

$\mathcal{Fig}.\ 8$

Nd:YVO$_4$ bei 100kHz ohne Regelung

$\mathcal{Fig}.\ 9$

**Nd:YLF bei 100kHz ohne Regelung**

*Fig. 10*

**Nd:YVO₄ mit Frequenzrampe (3MHz ... 10Hz) ohne Regelung**

*Fig.11*

Nd:YLF mit Frequenzrampe (3MHz ... 10Hz) ohne Regelung

**Fig. 12**

Nd:YVO$_4$ mit Frequenzrampe (3MHz ... 10Hz) mit Regelung

**Fig. 13**

Nd:YLF mit Frequenzrampe (3MHz ... 10Hz) mit Regelung

𝔉ig. 14

Nd:YVO₄ mit zufälligem Timing ohne Regelung

𝔉ig. 15

## Nd:YLF mit zufälligem Timing ohne Regelung

**Fig. 16**

## Nd:YVO₄ mit zufälligem Timing mit Regelung

**Fig. 17**

Nd:YLF mit zufälligem Timing mit Regelung

Fig. 18

Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1687876 A